# EUROPEAN PATENT APPLICATION

(11) **EP 1 672 952 A1**
(43) Date of publication of application: **21.06.2006**
(21) Application number: 05257616.2
(22) Date of filing: 13.12.2005
(51) Int. Cl.: H04Q 7/38, H04M 15/00

(54) **Intra- and inter-network handover of a telecommunication service**

(30) Priority: 16.12.2004 US 14555
(71) Applicant: LUCENT TECHNOLOGIES INC., Murray Hill, New Jersey 07974-0636 (US)
(72) Inventor: Claussen, Holger, Swindon SN25 4FP, Wiltshire (GB); Tse Wee Ho, Lester, Swindon SN5 5GD, Wiltshire (GB); Mullany, Frances Joseph, Blackrock, Co. Dublin (IE); Samuel, Louis Gwyn, Swindon SN5 5QD, Wiltshire (GB)
(74) Representative: Sarup, David Alexander

(57) **Abstract**

A method is provided of providing a service to a user terminal (20). According to this method, a first network (10) agrees with the user terminal (20) to provide the service at a certain charge rate, then starts to provide the service. Subsequently at least one other network (14) is invited by the first network (10) to provide the service. The first network (10) receives at least one offer from the other networks (14) to provide the service to the user terminal (20). The first network (10) then accepts one of the offers, such that the one of said other networks (14) thereafter provides the service and charges the user terminal without the first network being involved.

## Description

### FIELD OF THE INVENTION

The present invention relates to the handling of services in telecommunications networks.

### DESCRIPTION OF THE RELATED ART

Agent-based architectures have been suggested as a way of managing telecommunication systems, in particular wireless telecommunication systems. Agent-based architectures are a form of distributed computing where distributed autonomous software entities interact with each other. These software entities are referred to as negotiation agents, or simply, agents.

In a telecommunications environment, an agent-based architecture allows the charge rate for a service requested by a user to be negotiated. The charge rate can depend on the nature of the service, for example video streaming or voice. Other factors are the current channel conditions to the user terminal, where the user terminal is wireless, and also network conditions, such as current interference levels and level of network loading.

These other factors vary during the provision of the service to the user, sometimes very dramatically. For example, the attenuation due to channel conditions can vary by more than 100 dB when the user terminal moves. Also, as the user terminal moves, the user terminal can experience varying levels of interference to signals received from the network. This interference is due to nearby cells using channels of frequency bands that overlap. In consequence of these variations, a large amount of network resources can sometimes be required to handle calls to some user terminals. This can give rise to network congestion, possibly leading to calls being dropped.

Despite these variations, it should be noted that the charge rate for the service has been negotiated in advance, and so remains constant. In consequence, the negotiated charge rate for the service may no longer be proportionate to the radio resources expended by the network. In particular, networks can be saddled with providing services to some user terminals that unfortunately require a large amount of the network's resources, such as transmit power, although paying little. For example, a user terminal that is initially cheap to support in terms of network resources, can become expensive to support in terms of network resources, should it move to a location experiencing worse radio attenuation conditions. This is frustrating to the network operator, particularly when the user terminal, as a result of the changing radio conditions, has a much better signal path to a network of a competing operator.

One way around this problem is by sub-contracting. Sub-contracting is where the operator of a first network retains the business relationship with the user, but pays an operator of the second network to provide the requested service. Accordingly the first network remains involved at least to the extent of charging the user for the service. Such an approach has disadvantages. There is a lack of transparency to the user as to which network is providing the service. Furthermore, penalties for dropped calls, or poor quality of service, are not necessarily associated with the operator of the network that provides the service.

### SUMMARY OF THE INVENTION

The inventors realised that it would be advantageous for networks to be able to negotiate to transfer a service to a user from one network to another. Accordingly, an example of the present invention is a method of providing a service to a user terminal. According to this method, a first network agrees with the user terminal to provide the service at a certain charge rate, then starts to provide the service. Subsequently at least one other network is invited by the first network to provide the service. The first network receives at least one offer from the other networks to provide the service to the user terminal. The first network then accepts one of the offers, such that one of said other networks thereafter provides the service and charges the user terminal without the first network being involved.

A system can be provided in which networks negotiate in order to trade a contract to provide a service to a user terminal whilst that service is being provided. The contract can be transferred when, for example, the radio channel conditions, the interference, or the network loading of the first network is such that the service could better be provided by a second network.

The transfer of service to a user from one network to another network can occur when a user terminal, which is wireless, experiences better radio conditions in respect of that another network. In consequence, less network resources are required to provide the service to the user. As a result, the networks can provide services to more users at a time overall. In other words, system capacity is increased.

The present invention also provides a corresponding approach whereby other base stations within a network can bid to take over a service to a user being provided by a first base station.

An example of the present invention provides a telecommunications system comprising a first network entity and at least one other network entity, the first network entity comprising a negotiation agent and telecommunication apparatus, the negotiation agent being configured to agree with a user terminal to provide the service at a certain charge rate and the telecommunication apparatus being configured to start to provide the service to the user terminal; the negotiation agent being configured to control sending invitations to at least one other network entity to provide the service; the negotiation agent being configured to receive at least one offer from said at least one other network entity to provide the service to the user terminal; and the negotiation agent being configured to accept one of the offers, said first network entity being configured to, in response to the acceptance, cease providing the service and charging for the service, and hand provision of the service to one of said other network entities.

Preferably, the network entities are telecommunications networks. Preferably, the network entities are base stations for wireless telecommunications. Preferably, the user terminal comprises a wireless user terminal.

Preferably, the negotiation agent includes means to determine whether channel conditions are sufficiently poor that the invitations should be sent. Preferably, the negotiation agent includes means to determine whether interference to the user terminal is sufficiently high that the invitations should be sent. Preferably, the first network entity is one type of radio access network, and the one of the other network entities providing the service thereafter is another type of radio access network.

Preferably, the negotiation agent includes means to determine whether traffic loading on the first network is sufficiently high that the invitations should be sent.

Preferably, the negotiation agent includes means to determine whether the first network entity uses more than a predetermined level of resource in providing services to lower-price paying users than premium-price paying customers and so the invitations should be sent.

Preferably, the negotiation agent is configured to determine that the other network entity selected does not guarantee a quality of service level agreed between the first network and the user terminal, and so the first network entity pays a credit in favour of the user terminal.

Preferably, said service, which is provided thereafter by one of the other network entities, is one of a plurality of services, said services being provided until then to the user terminal by the first network entity, the first network entity providing thereafter the other of said services to the user terminal.

Preferably, each of the at least one other network entities includes a respective negotiation agent operative to receive the invitations and provide offers, and the negotiation agent of the first network entity is configured to control the sending of the invitations and make the acceptance.

### BRIEF DESCRIPTION OF THE DRAWINGS

The present invention will be better understood from reading the following description of non-limiting embodiments, with reference to the attached drawings, wherein below:
Figure 1 is a diagram illustrating a telecommunications system (a) during negotiation to transfer provision of a service to a user from a first network to a second network, and (b) after the negotiation has been completed;
Figure 2 is a flowchart illustrating the negotiation process referred to in respect of Figure 1;
Figure 3 is a diagram illustrating a telecommunications system (a) during negotiation to transfer part of a service being provided to a user, and (b) after that negotiation has been completed; and
Figure 4 is a diagram illustrating a telecommunications system (a) during negotiation between base stations of a network for transfer of provision of a service to a user terminal, and (b) after the negotiation has been completed.

### DETAILED DESCRIPTION

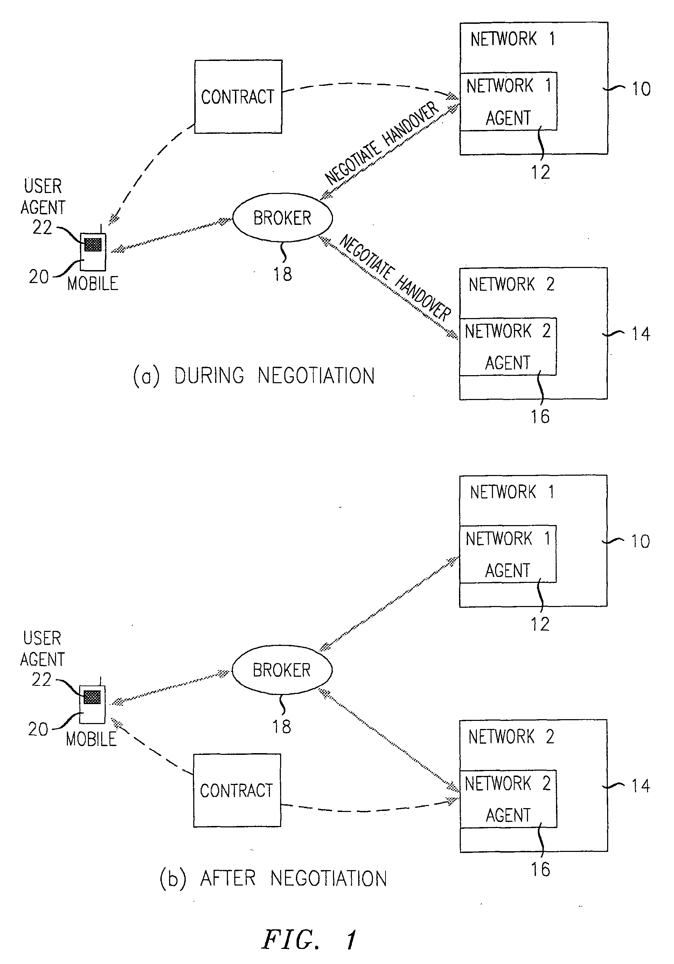

As shown in Figure 1, a first radio access network (RAN) 10 includes a software entity that is a negotiation agent 12. A second radio access network 14 also includes a corresponding software entity of a negotiation agent 16. The networks 10,14 are radio access networks such as Global System for Mobiles (GSM), Universal Mobile Telecommunication Systems (UMTS) or Wireless Local Area Network (WLAN) networks. These networks can provide data, voice, video or other services. Each network 10,14 is under the control of a corresponding operator. The networks 10,14 overlap in their areas of coverage such that a user terminal at a location can connect to one of several networks.

Another software entity, which is also a negotiation agent, is provided, known as a broker 18. User terminals 20, which are mobile, are provided, one of which is shown in Figure 1 for simplicity. Each mobile user terminal 20 includes within itself a software entity, which is a negotiation agent, known as a user agent 22.

The broker 18 exchanges data with the user terminal 20 and networks 10,14. In particular, the broker 18 provides auctioning mechanisms so as to negotiate contracts for provision of a service to a user terminal 20. Specifically this is done by communications between the broker 18 and the agents 12,16 of each network 10,14 and the user agent 22 of the user terminal 20.

In this example, the agents 12,16 of the networks reside in their respective networks 10,14, although in other embodiments they need not do so. In this example, the broker 18 resides on a processor (not shown) separate from the networks 10,14, although again, in other examples the broker could reside elsewhere, for example in one of the networks. The user agent 22 resides, in this example on the mobile terminal 20, but in other examples could reside elsewhere, such as in a separate processor or in one of the networks.

Before a service to a user terminal 20 is provided, the broker 18 conducts an initial auction between the networks 10,14, as to which will provide the requested service. The broker 18 awards the contract to provide the service to the user terminal 20 to the network which wins that auction, in this case network 10. The contract relates what type of service will be supplied by the network 10 for what cost to the user in return. The cost is such as charge rate per unit time or charge rate per amount of data transferred.

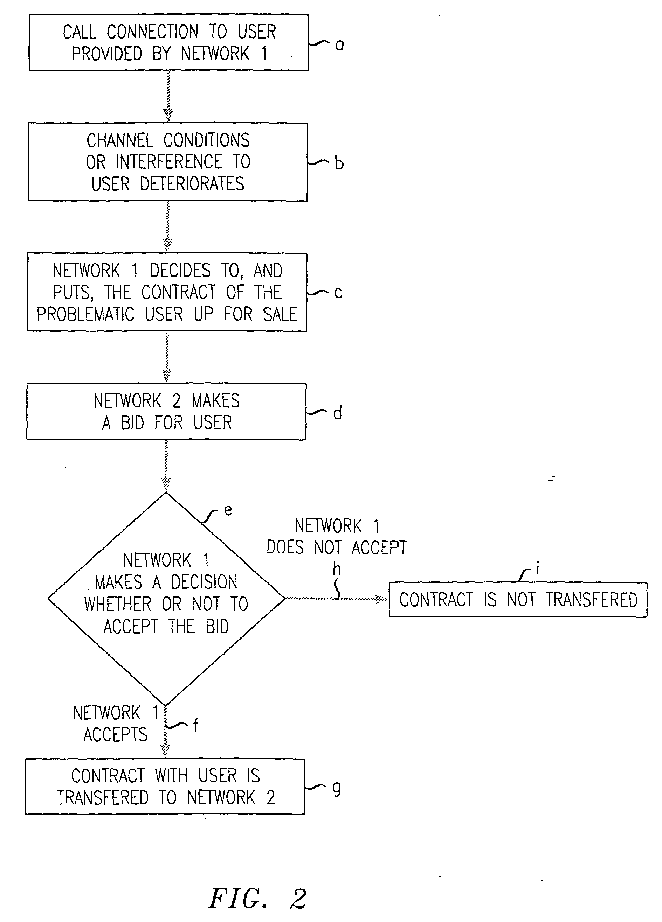

Whilst the service is being provided to the user terminal 20 via the first network 10, if radio channel conditions deteriorate or interference levels increase for example, the broker 18 interacts further with the corresponding agents 12,16 of the networks 10,14 in order to determine whether the contract will be transferred to the second network 14. If the result of the negotiation is that the contract is transferred, as shown in Figure 2, then the second network 14 instead provides the remaining portion of the service.

### Negotiation Process

Figure 2 shows the negotiation process by which a service to a user terminal 20 can be transferred between networks 10,14. As shown in Figure 2, a service to a user is initially provided by way of a call connection to the first network 10 (step a). During the call, the radio channel conditions can deteriorate or the interference increases (step b). By considering the interference level, or resources required to continue providing a service to the user despite the poor radio channel conditions, the first network 10 decides to put the contract associated with the user terminal up for sale (step c) in an attempt to increase revenue by making resources available for more lucrative contracts with other users. From considering the details of the contract provided from the broker 18 to the agent 16 of the second network 14, the agent 16 decides to bid for the contract with the mobile terminal 20. This bid is then made (step d). Details of the bid are then passed via the broker 18 to the agent 12 of the first network 10. The agent 12 then makes a decision (step e) whether or not to accept the bid. If agent 12 decides (step h) not to accept the bid, the contract is not transferred (step i) and accordingly, the first network 10 continues to provide the service to the mobile terminal 20. On the other hand, if the agent 16 decides to accept the bid the second network 14 is so informed, and accordingly, the rest of the service is provided to the mobile terminal 20 by the second network 14. The second network 14 charges the user terminal at the same charge rate as previously agreed between the user terminal 20 and the first network 10 in the contract.

The contract is for provision of a service to a particular user terminal during a single session. During the session, the transfer to a different network can occur. In another example (not shown), which is otherwise similar, contracts are longer term, covering multiple sessions, so the transfer can occur during a session or between the sessions.

For simplicity, only two networks 10, 14 are shown in Figure 1. Other networks can also bid to take over the contract with a view to providing the user terminal 20 with the service for the remaining portion of the session.

### Triggers to inviting other networks to take over

This approach of offering up a contract with a user for possible acquisition by other networks has a number of consequential advantages. Networks can rid themselves of users suffering weak channel conditions or high interference and so using up most of the resources. In consequence there is less likelihood of calls being dropped. All the networks involved get the benefit of being able to offload resource-greedy users to other networks where they are less greedy. The result is a win-win situation for all the networks involved. In consequence networks can handle services to more users at any one time. Particularly in congested systems, the overall system capacity is automatically optimised in consequence.

This approach is particularly useful when radio conditions change relatively slowly because then the agent architecture has time to react by having the networks trade the contract.

Another reason for a network deciding to offer up a contract is where there is high interference causing a higher transmit power to be required, and in some cases even causing a risk that the service to the mobile user terminal will be dropped. Another reason is simply to free up resources in a heavily loaded network.

In some embodiments, the network currently handling the contract can decide to offer the contract to other networks on the basis that it will thereby free up resources for higher value customers without dropping calls. Accordingly the contract can be offered up even when there is no deterioration in channel conditions or increase in interference or loading.

### Quality of service

In many scenarios, the second network 14 undertakes to provide a sufficiently good service, for example avoiding excess of delays, that the quality of service guarantees associated with the contract are met in full. In consequence the operator of the first network 10 pays no penalty to the user on transferring the contract to the operator of the second network 14. A penalty is a refund to, or reduction in charge to, the user. Even where the agent 16 associated with the second network 14 cannot guarantee the same high level of quality of service, then contract sale is still possible on the basis that a reduced quality service will be provided. However in this case, the operator of the first network 10 pays an associated penalty to the user for the reduction in quality of service. In many scenarios, the contract has a graduated series of penalties corresponding to the degree of degradation of quality of service. Particularly as the penalty due to a quality service reduction is likely to be less than that suffered if the user were completely dropped, contract transfer and consequential service provision by a second network, may well still be worthwhile from the point of view of the first network.

### Transferring part of a contract

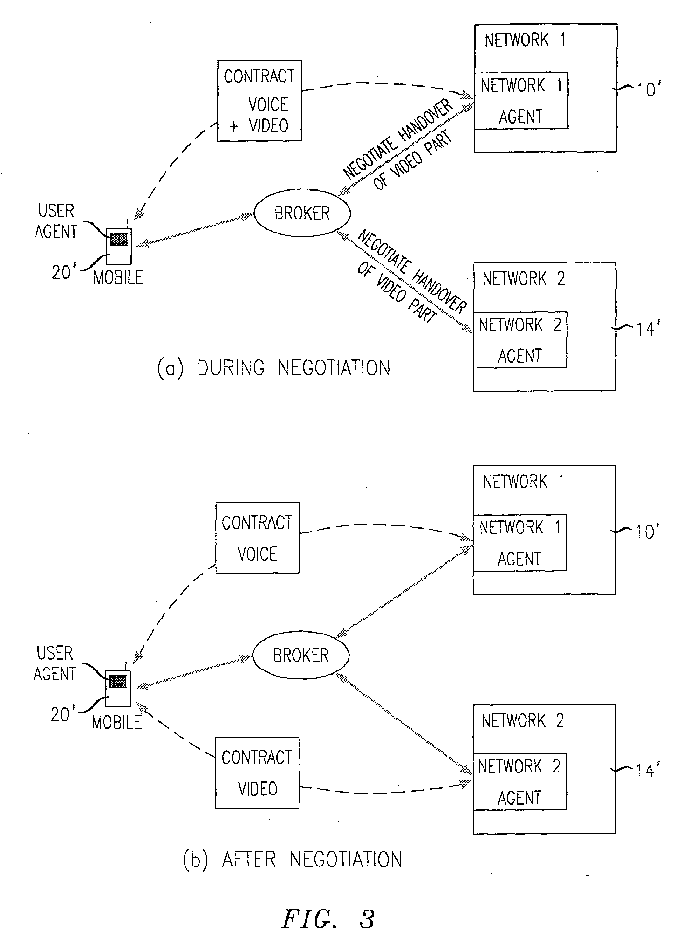

As shown in Figure 3 rather than a whole contract being transferred to another network, a contract can be split. As shown in Figure 3 (a) the initial contract is for provision of a voice and video service to the mobile terminal. The first network 10' which provides this service becomes congested due to additional users therefore the first network 10' decides to sell the video part of the contract to a competing network, whilst keeping the voice part of the contract as this requires little resources. Accordingly, the original contract is split into two, namely a contract for the voice service and a contract for the video service. As shown in Figure 3 (b) as a result of the negotiation the contract for the video service passes to the second network 14' in consequence, the second network 14' provides the video service to the mobile terminal 20' from then onwards. Note that both the first network 10' and second network 14' then have a business relationship with the user terminal 20' in providing the requested services. However, the total price to the user remains the same even though the voice and video transmissions are provided by different networks 10', 14'. The two networks 10', 14', can of course be radio access networks of different types, such as WLAN, UMTS, and GSM.

### Negotiation between base stations in a single network

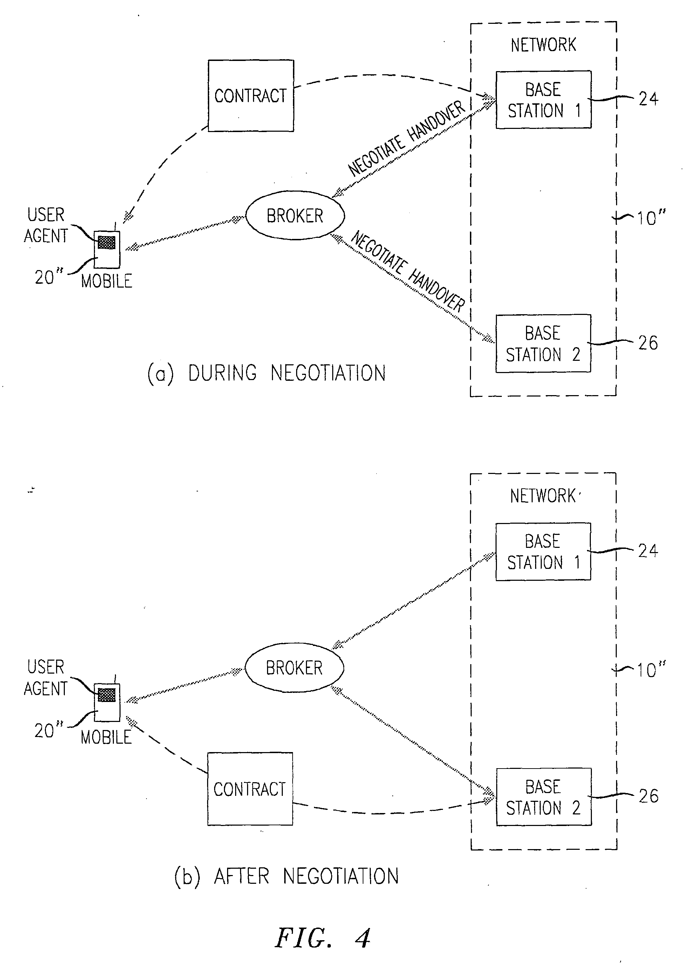

Examples have been presented as to how contracts can be transferred between networks. Alternatively a contract can be transferred between different portions of one network, as shown in Figure 4, on a similar basis.

As shown in Figure 4 one radio access network 10" includes two base stations 24,26. In this scenario, the base stations 24,26, each including an associated agent (not shown). As shown in Figure 4 (a), whilst the service is being provided to the mobile user terminal 20" via the first base station 24, if radio channel conditions deteriorate or interference levels increase for example, the broker 18 interacts further with the corresponding agents of the base stations 24,26 in order to determine whether the contract will be transferred to the second base station 26. If the result of the negotiation is that the contract is transferred, as shown in Figure 4(b), then the second base station 26 instead thereafter provides the remaining portion of the service to the user terminal 20". Within the network 10" the base stations 24,26 can be of the same type e.g. (UMTS WLAN, GSM) or different from each other. This approach automatically improves the internal capacity of the network 10".

### General

The present invention may be embodied in other specific forms without departing from its spirit or essential characteristics; for example in telecommunications systems involving fixed line connections rather than wireless connections, and user terminals that are not mobile. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of network entities providing a service to a user terminal, the method comprising a first network entity:
agreeing with a user terminal to provide the service at a certain charge rate;
starting to provide the service;
subsequently inviting at least one other network entity to provide the service;
receiving at least one offer from said at least one other network-entity to provide the service to the user terminal; and
accepting one of the offers such that said first network entity ceases both providing the service and charging for the service, and hands the provision of the service to the selected other network entity.

2. A method according to claim 1, wherein the network entities are telecommunications networks.

3. A method according to claim 1, wherein the network entities are base stations for wireless telecommunications.

4. A method according to claim 1, wherein the user terminal comprises a wireless user terminal.

5. A method according to claim 4, wherein the step of inviting is triggered by a determination that channel conditions between the first network entity and the user terminal have deteriorated to below a threshold level.

6. A method according to claim 4, wherein the step of inviting is triggered by the service to the user terminal experiencing interference above a threshold level.

7. A method according to claim 4, wherein the first network entity is one type of radio access network, and the one of the other network entities providing the service thereafter is another type of radio access network.

8. A method according to claim 1, wherein the step of inviting is triggered by the traffic loading on the first network entity rising above a threshold level.

9. A method according to claim 1, wherein the step of inviting is triggered by the first network entity using more than a predetermined level of resource in providing services to users who pay a lower-price than premium-price paying customers.

10. A method according to claim 1, wherein the step of accepting an offer includes determining that the other network entity selected does not guarantee a quality of service level agreed between the first network entity and the user terminal, and so the first network entity pays a credit in favour of the user terminal.

11. A method according to claim 1, wherein said service, which is provided thereafter by one of the other network entities, is one of a plurality of services, said services being provided until then to the user terminal by the first network entity, the first network entity providing thereafter the other of said services to the user terminal.

12. A method according to claim 11, wherein the plurality of services comprises a video service and an audio service.

13. A method according to claim 1, wherein each of the at least one other network entities includes a negotiation agent operative to receive the invitations and provide offers, and the first network entity includes a negotiation agent operative to control the sending of the invitations and make the acceptance.

14. A method according to claim 13, wherein the invitations, offers and acceptance are negotiated through a negotiation broker agent.

15. A telecommunications system comprising a first network entity and at least one other network entity, the first network entity comprising a negotiation agent and telecommunication apparatus, the negotiation agent being configured to agree with a user terminal to provide the service at a certain charge rate and the telecommunication apparatus being configured to start to provide the service to the user terminal;
the negotiation agent being configured to control sending invitations to at least one other network entity to provide the service;
the negotiation agent being configured to receive at least one offer from said at least one other network entity to provide the service to the user terminal; and
the negotiation agent being configured to accept one of the offers, said first network entity being configured to, in response to the acceptance, cease providing the service and charging for the service, and hand provision of the service to one of said other network entities.

16. A method of providing a service to a user terminal by a first network entity and a second network entity, the method comprising the steps of the second network entity:
receiving an invitation from the first network entity to offer to provide the service;
sending an offer to provide the service;
receiving an indication that the offer has been accepted by the first network entity so as to hand provision of the service to the second network entity;
being handed provision of the service so as to provide the service and charge the user terminal without the first network entity being involved.
